# EUROPÄISCHE PATENTANMELDUNG

(11) **EP 3 037 183 A1**
(43) Veröffentlichungstag der Anmeldung: **29.06.2016**
(21) Anmeldenummer: 15199519.8
(22) Anmeldetag: 11.12.2015
(51) Int. Cl.: B08B 9/055, F16L 55/46

(54) **ROHRLEITUNGSSYSTEM MIT EINER EINEN REINIGUNGSMOLCH AUFNEHMENDEN MOLCHSCHLEUSE**

(30) Priorität: 23.12.2014 DE 102014019137
(71) Anmelder: Holm, Niels Christian, 23479 Hille (DE)
(72) Erfinder: Holm, Niels Christian, 23479 Hille (DE); Stahnke, Uwe, 32425 Hille (DE); Schulz, Wolfgang, 31603 Diepenau (DE)
(74) Vertreter: Lobemeier, Martin Landolf

(57) **Zusammenfassung**

Rohrleitungssystem (10) mit wenigstens einer ein Fluid aufnehmenden Rohrleitung (20) und einer mit der Rohrleitung (20) verbundenen, einen Reinigungsmolch (40) aufnehmenden Molchschleuse (30), dadurch gekennzeichnet, dass der Reinigungsmolch (40) eine geringere mittlere Dichte als das Fluid aufweist und die Molchschleuse (30) unterhalb eines stromaufwärts angeordneten Abschnitts (20a) der Rohrleitung (20) angeordnet ist, wobei ein stromabwärts angeordneter Abschnitt (20b) der Rohrleitung (20) durch die Molchschleuse (30) geführt ist und die Molchschleuse (30) oberhalb der Durchführung einen Raum (32) zur Aufnahme des Reinigungsmolchs (40) aufweist, der einen ungehinderten Durchfluss von Fluid durch die Molchschleuse (30) erlaubt.

## Beschreibung

Die Erfindung betrifft ein Rohrleitungssystem mit wenigstens einer ein Fluid aufnehmenden Rohrleitung und einer mit der Rohrleitung verbundenen, einen Reinigungsmolch aufnehmenden Molchschleuse.

Derartige Systeme sind insbesondere aus der Gas-, Erdöl- und Produkten-Pipeline-Technik, aber auch aus der Abwasser- und Trinkwassertechnik bekannt, wobei die Einrichtungen zur Reinigung und/oder Inspektion unter dem Begriff "Molchtechnik" zusammengefasst werden.

Aber auch bei der Kultivierung photosynthetischer Organismen in lichtdurchlässigen Röhren kann die Molchtechnik zur Beseitigung von an der Innenseite der lichtdurchlässigen Röhren anhaftendem Biofilm verwendet werden.

Ein sich auf der Innenseite lichtdurchlässiger Röhren anlagernder Biofilm ist aus mehreren Gründen nachteilig - hierzu zählen unter anderem:
1. Der Bewuchs auf den Licht zugewandten Seiten beschattet das wässrige Medium, so dass die nicht angehefteten Organismen (also diejenigen, die im freien Wasser vorhanden sind) in ihrer Photosynthesekapazität inhibiert werden.
2. Sich ablösende Biofilmfladen können zu Verstopfungen führen.
3. Die Kulturbedingungen können nicht genau hinsichtlich optimaler Dichte der Kulturen geregelt bzw. gesteuert werden.
4. Genau regelbare Ernteverfahren sind nicht möglich.
5. Das Röhrenmaterial kann durch Biofilmbewuchs beschädigt werden.

Für die Durchführung der Molchtechnik wird, meistens über Schächte oder T-Stücke, ein sogenannter (Reinigungs-)Molch in die Leitung eingebracht, der mittels einer ausreichend hohen internen Fließgeschwindigkeit und Druck durch das Leitungsnetz gedrückt wird oder mittels eines selbsttätigen internen Antriebes das Rohrleitungssystem durchfährt und dabei reinigt. Dabei wird der Reinigungsmolch an einem stromaufwärts angeordneten Abschnitt einer Rohrleitung mittels einer Molchschleuse in die Rohrleitung eingebracht und einem stromabwärts angeordneten Abschnitt der Rohrleitung an einer weiteren Molchschleuse aus der Rohrleitung entnommen.

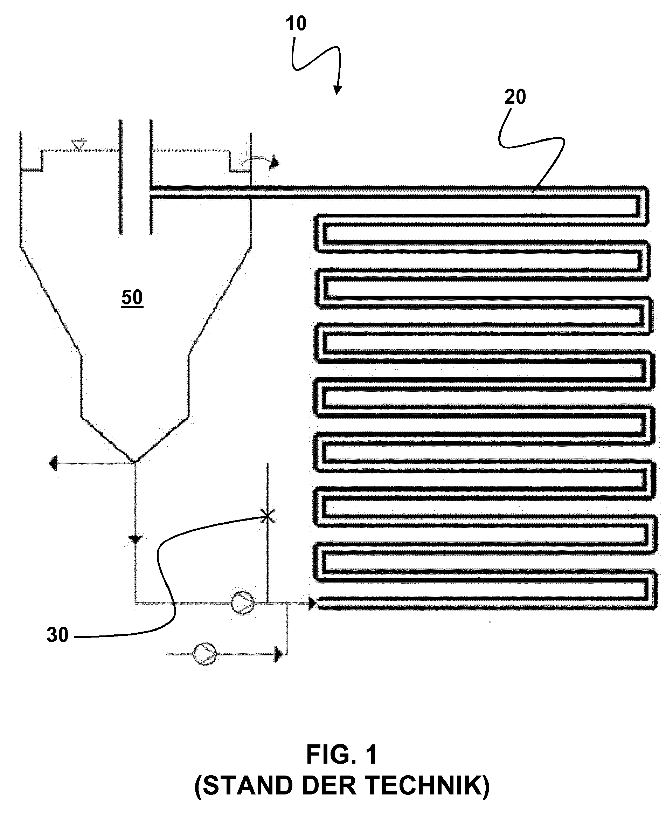

In Fig. 1 ist eine vereinfachte Darstellung einer Kultivierungsanlage zur Produktion von photosynthetisch aktiver Biomasse im Rahmen der Abwasserbehandlung nach dem Stand der Technik gezeigt - dieser Aufbau ist bereits aus der deutschen Patentanmeldung Nr. 10 2013 112 269.8 bekannt:
Das Rohrleitungssystem 10 der Anlage weist eine ein Fluid aufnehmende, durchsichtig ausgebildete Rohrleitung 20 auf, die vertikal mäandrierend ausgebildet ist und zur Kultivierung von photosynthetisch aktiven Organismen verwendet wird. Mit dieser Rohrleitung 20 verbunden, ist eine Molchschleuse 30 vorgesehen, die einen (nicht dargestellten) Reinigungsmolch aufnehmen kann, der durch die Rohrleitung 20 geführt und letztendlich in den Behälter 50 gespült wird, aus dem der Reinigungsmolch dann manuell entnommen werden muss.

Dieses Beispiel macht die Nachteile der bekannten Molchtechnik deutlich, nämlich der manuelle Aufwand zum Einsetzen und Entnehmen des Reinigungsmolchs und der sich daraus ergebende Zeitabstand zwischen den Reinigungsläufen.

Aufgabe der Erfindung ist es daher, ein Rohrleitungssystem zu schaffen, das eine Reinigung wenigstens einer Rohrleitung jederzeit und mit nur geringem Aufwand ermöglicht. Dabei sollte die Reinigung des Systems insbesondere weitgehend automatisch ablaufen können.

Erfindungsgemäß wird diese Aufgabe durch die Vorrichtung mit den Merkmalen von Anspruch 1 oder durch die Vorrichtung mit den Merkmalen des nebengeordneten Anspruchs 2 gelöst. Die Unteransprüche geben bevorzugte Ausgestaltungen der Erfindung wieder.

Grundgedanke der Erfindung ist es, ein Rohrleitungssystem mit wenigstens einer ein Fluid aufnehmenden Rohrleitung und einer mit der Rohrleitung verbundenen, einen Reinigungsmolch aufnehmenden Molchschleuse so auszugestalten, dass der Reinigungsmolch eine geringere mittlere Dichte als das Fluid aufweist und die Molchschleuse unterhalb eines stromaufwärts angeordneten Abschnitts der Rohrleitung angeordnet ist, wobei ein stromabwärts angeordneter Abschnitt der Rohrleitung durch die Molchschleuse geführt ist und die Molchschleuse oberhalb der Durchführung einen Raum zur Aufnahme des Reinigungsmolchs aufweist, der einen ungehinderten Durchfluss von Fluid durch die Molchschleuse erlaubt.

Der statische Auftrieb des Reinigungsmolchs sorgt durch seine Neigung aus dem Fluid aufzutauchen in der Molchschleuse also dafür, dass der Reinigungsmolch in dem Raum oberhalb der Durchführung in einer "Parkstellung" aufgenommen wird.

Alternativ ist es vorgesehen, ein Rohrleitungssystem mit wenigstens einer ein Fluid aufnehmenden Rohrleitung und einer mit der Rohrleitung verbundenen, einen Reinigungsmolch aufnehmenden Molchschleuse so auszugestalten, dass der Reinigungsmolch eine größere mittlere Dichte als das Fluid aufweist und die Molchschleuse oberhalb eines stromaufwärts angeordneten Abschnitts der Rohrleitung angeordnet ist, wobei ein stromabwärts angeordneter Abschnitt der Rohrleitung durch die Molchschleuse geführt ist und die Molchschleuse unterhalb der Durchführung einen Raum zur Aufnahme des Reinigungsmolchs aufweist, der einen ungehinderten Durchfluss von Fluid durch die Molchschleuse erlaubt.

Diese Ausgestaltung führt dazu, dass der Reinigungsmolch im Durchführungsbereich der Molchschleuse in den darunter vorgesehenen Raum der Molchschleuse in die "Parkstellung" absinkt.

Die zu reinigende Rohrleitung ist somit in jedem Fall in einer Schleife geführt, wobei der stromaufwärts angeordnete Abschnitt der Rohrleitung und der stromabwärts angeordnete Abschnitt der Rohrleitung über die Molchschleuse miteinander verbunden sind. Durch diese Ausgestaltung kann ein in sich geschlossener, zyklischer Reinigungsablauf erfolgen. Bei "Normalbetrieb" (also wenn nicht gereinigt wird) ist die Molchschleuse von dem stromaufwärts angeordneten Abschnitt der Rohrleitung mittels einer ersten Absperreinrichtung, z.B. eines Schiebers, voneinander getrennt.

Insbesondere ist zur Ausführung der Reinigung eine Steuerung vorgesehen, die den Reinigungsmolch automatisch in den Fluidstrom des stromaufwärts angeordneten Abschnitts der Rohrleitung einbringt, wobei der Reinigungsmolch automatisch wieder in seine "Parkstellung" in der stromabwärts angeordneten Molchschleuse gelangt.

Bevorzugt weist die unterhalb des stromaufwärts angeordneten Abschnitts der Rohrleitung angeordnete Molchschleuse eine Entlüftungseinrichtung zum Entlüften der Molchschleuse auf.

Weiter bevorzugt weist die Molchschleuse eine Detektionseinrichtung zum Detektieren eines in der Molchschleuse angeordneten Reinigungsmolchs aufweist. Die Detektionseinrichtung ist insbesondere zur Sicherung eines fehlerfreien Reinigungsablaufs sinnvoll, da diese bei Ausbleiben der Detektion nach Ablauf einer vorbestimmten Zeit zur Ausgabe eines Warnsignals genutzt werden kann: in diesem Fall wird der Reinigungsmolch in einem Rohrabschnitt "feststecken", sodass ein "Normalbetrieb" nicht stattfinden kann und der Fehler erst behoben werden muss.

Bevorzugt ist vorgesehen, dass zwischen dem stromaufwärts angeordneten Abschnitt der Rohrleitung und der Molchschleuse eine erste Absperreinrichtung angeordnet ist. So kann sichergestellt werden, dass der Reinigungsmolch nicht permanent in der Rohrleitung zirkuliert.

Ist es hingegen wünschenswert, dass der Reinigungsmolch, insbesondere ein als Bypass-Molch ausgebildeter Reinigungsmolch, permanent zirkuliert, wird auf die erste Absperreinrichtung verzichtet, wobei die Molchschleuse dann so konzipiert sein muss, dass das in der Rohrleitung geführte Fluid über die Molchschleuse hinaus stromabwärts fließen kann.

Zur Entsorgung des durch den Reinigungsmolch von der Innenwandung der Rohleitung entfernten Biofilms ist ein vor dem stromabwärts angeordneten Teil der Molchschleuse an der Rohrleitung angeordneter Erntebehälter vorgesehen, der den Biofilm, den der Reinigungsmolch vor sich her schiebt, aufnimmt.

Bevorzugt ist eine zwischen der Rohrleitung und dem Erntebehälter angeordnete zweite Absperreinrichtung, beispielsweise ein Schieber, vorgesehen, damit der Erntebehälter nur bei Bedarf mit der Rohrleitung kommunizierend eingerichtet werden kann.

Bevorzugt können auch geeignete Strukturen an der Innenwandung der Rohrleitung vorgesehen sein, die das Material in Richtung des Erntebehälters leiten.

Insbesondere ist aber eine in der Rohrleitung zwischen dem Erntebehälter und dem stromabwärts angeordneten Teil der Molchschleuse angeordnete dritte Absperreinrichtung vorgesehen, die geschlossen werden kann, damit das vor dem Reinigungsmolch vor sich hergeschobene Material in den Erntebehälter gedrückt wird.

Die Erfindung wird anhand von in den Zeichnungen dargestellten, besonders bevorzugt ausgestalteten Ausführungsbeispielen aus der Algenkultur näher erläutert. Es zeigen:
- Fig. 1: den schematischen Aufbau einer Anlage zur Kultivierung von photosynthetisch aktiven Organismen nach dem Stand der Technik;
- Fig. 2: eine schematische Detailansicht eines bevorzugt ausgestalteten Rohrleitungssystems nach der Erfindung; und
- Fig. 3: eine schematische Detailansicht eines besonders bevorzugt ausgestalteten Rohrleitungssystems nach der Erfindung.

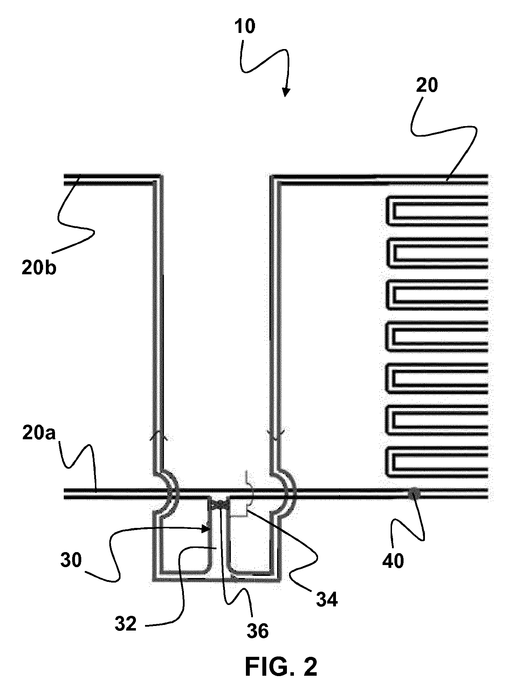

Fig. 2 zeigt eine schematische Detailansicht eines besonders bevorzugt ausgestalteten Ausführungsbeispiels nach der Erfindung, die sich an das in Fig. 1 dargestellte Beispiel anlehnt. Grundsätzlich kann der Aufbau des erfindungsgemäßen Rohrleitungssystems aber für jeden anderen Zweck außerhalb der Algenzucht oder Abwasserbehandlung verwendet werden.

Die Rohrleitung 20 weist einen stromaufwärts angeordneten Abschnitt 20a und einen stromabwärts angeordneten Abschnitt 20b auf. Die Molchschleuse 30 ist unterhalb des stromaufwärts angeordneten Abschnitts 20a der Rohrleitung 20 angeordnet, wobei der stromabwärts angeordneten Abschnitt 20b durch die Molchschleuse 30 geführt ist. Des weiteren ist ein in der Rohrleitung 20 angeordneter Reinigungsmolch 40 zu erkennen.

Die Molchschleuse 30 weist oberhalb der Durchführung einen Raum 32 auf, in den der Reinigungsmolch 40 nach Durchlaufen der Rohrleitung 20 zurückkehrt und dort bevorzugt in einer "Parkstellung" verharrt. Hierzu ist insbesondere in der Rohrleitung im Bereich der Molchschleuse 30 eine Struktur vorgesehen, die den Reinigungsmolch 40 an einer weiteren Passage nach stromabwärts hindert und gegebenenfalls in den Raum 32 zwingt.

Der Raum 32 der Molchschleuse 30 ist von der Rohrleitung 20 bevorzugt durch eine erste Absperreinrichtung 36 getrennt, die beispielsweise als Schieber ausgebildet sein kann. Bevorzugt weist die Molchschleuse 30 darüber hinaus eine Entlüftungseinrichtung 34 auf, die besonders bevorzugt direkt unterhalb der ersten Absperreinrichtung 36 entlüftet.

Im Folgenden wird der Ablauf eines Reinigungszyklus beschrieben:
a. Die Pumpen, die das Fluid durch die Rohrleitung pumpen, werden zu einem frei wählbaren Zeitpunkt automatisch für einen kurzen Moment (z. B. wenige Minuten) deaktiviert, so dass die (lichtdurchlässige) Rohrleitung nicht durchströmt wird.
b. Nach Deaktivierung der Pumpen erfolgt die automatische Öffnung der ersten Absperreinrichtung 36. Dieses bewirkt unmittelbar das Aufschwimmen des Reinigungsmolchs 40, der zuvor unter der ersten Absperreinrichtung 36 "gefangen" war, in die Rohrleitung 20 hinein.
c. Kurz danach (z. B. einige Sekunden später) wird die erste Absperreinrichtung 36 wieder geschlossen und die Pumpen danach wieder aktiviert, womit ein Reinigungszyklus beginnt. Der Reinigungszyklus ist beendet, sobald der Reinigungsmolch 40 wieder nach einer vorbestimmten Zeitspanne unter die erste Absperreinrichtung 36 in den Raum 32 der Molchschleuse 30 zurückgekehrt ist.
d. Je nach Ausmaß der photosynthetischen Sauerstoffgas-Produktion wird die Entlüftungsvorrichtung 34 intermittierend aktiviert.

Durch diesen Aufbau wird eine automatische Reinigung ermöglicht.

Durch entsprechende Ansteuerung der Pumpen und der Absperreinrichtungen kann die Frequenz der Reinigungszyklen frei gewählt werden, z.B. alle 50 x X Minuten durch Wiederholung der Schritte a, b und c.

Eine weitere besondere Ausführungsform der Erfindung betrifft die Detektierung des Reinigungsmolchs 40 in der Molchsschleuse 30. Hierfür wird eine Detektionseinrichtung (nicht dargestellt), z. B. eine Berührungssonde oder eine Lichtschranke, in der Molchschleuse 40 installiert. Die Steuerungseinheit der Anlage "weiß", dass der Reinigungsmolch 40 nach einer vorbestimmten Zeit nach Schließung der Absperreinrichtung wieder in der Molchschleuse 30 angekommen sein muss. Falls diese Zeitspanne um einen vorbestimmten Betrag überschritten wird, die Detektierung also nicht die Ankunft der Reinigungseinheit meldet, erfolgt eine automatische (Alarm-)Meldung.

Die photosynthetischen Organismen, die eine ausgeprägte Neigung zur Biofilmbildung an den Innenseiten der lichtdurchlässigen Rohrleitung 20 haben, können zwar teilweise die gleichen Organismen sein, die auch in der rein wässrigen Kulturlösung vorhanden sind. Da die Neigung zur Biofilmbildung allerdings bei unterschiedlichen Organismen unterschiedlich ist, kann davon ausgegangen werden, dass die Zusammensetzung der Biofilmpopulationen eine (etwas) andere ist als die der rein wässrigen Populationen. Daher wäre es von großen Vorteil, die Biofilmpopulationen selektiv aus dem System zu entfernen.

Im Verlauf eines Reinigungsprozesses schiebt der Reinigungsmolch 40 den von der Innenwandung der Rohrleitung 20 abgeriebenen Biofilmfladen vor sich her und kann diesen in den in Fig. 1 dargestellten Behälter 50 fördern, in dem der Biofilmfladen in die Trichterspitze hineinsinkt aus der Trichterspitze gemeinsam mit den kultivierten Organismen entfernt werden kann.

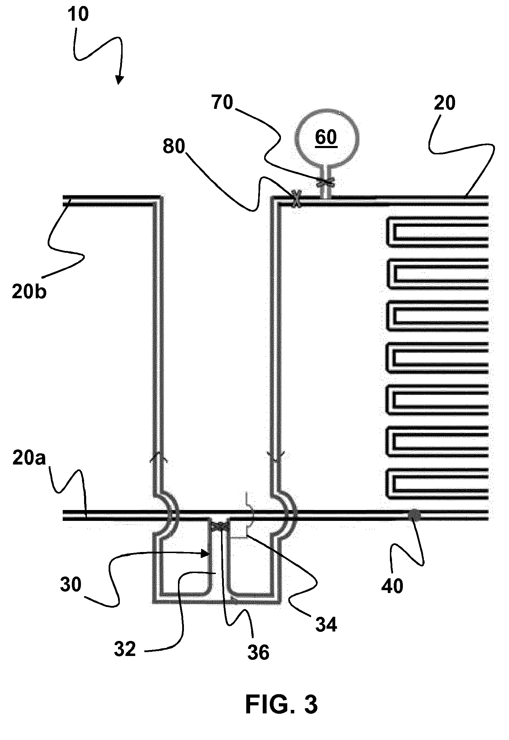

Zur selektiven Entnahme von den Biofilm aufbauenden Organismen wird die Anlage, wie in Fig. 3 gezeigt, weiter ausgebildet:
Bevorzugt wird die Rohrleitung 20 vor Start eines Reinigungsvorgangs mit Klarwasser wenigstens teilweise geflutet und der Reinigungsmolch 20 in das Klarwasser geschickt. Der Reinigungsmolch 40 schiebt die abgeriebenen Biofilmfladen wie bekannt vor sich her, wobei bevorzugt eine zweite Absperreinrichtung 70, die in Verbindung mit einem BiofilmErntebehälter 60 in Verbindung steht, geöffnet und eine hinter dem Biofilm-Erntebehälter 60 in der Rohrleitung 20 angeordnete dritte Absperreinrichtung 80 geschlossen wird, sodass der Biofilmfladen nicht weiter nach stromabwärts transportiert werden kann, sondern in den mit der Rohrleitung 20 in Verbindung stehenden separaten Biofilm-Erntebehälter 60 geschoben wird.

Durch diese Vorgehensweise kann eine selektive Entsorgung der den Biofilm aufbauenden Organismen erreicht werden.

In gleicher Art und Weise kann auch eine chemische Reinigung erfolgen, z.B. mit einer schwachen Säure um Kalkablagerungen zu entfernen und dieses verschmutzte Spülwasser wird dann analog entsorgt.

Damit der Reiningungsmolch 40 nicht in den Biofilm-Erntebehälter 60 gelangen kann, wird auch hier bevorzugt eine Zwangsführung vorgesehen sein, die ein Eindringen des Reinigungsmolchs in den Erntebehälter 60 verhindert.

## Patentansprüche

1. Rohrleitungssystem (10) mit wenigstens einer ein Fluid aufnehmenden Rohrleitung (20) und einer mit der Rohrleitung (20) verbundenen, einen Reinigungsmolch (40) aufnehmenden Molchschleuse (30),
**dadurch gekennzeichnet, dass**
- der Reinigungsmolch (40) eine geringere mittlere Dichte als das Fluid aufweist und
- die Molchschleuse (30) unterhalb eines stromaufwärts angeordneten Abschnitts (20a) der Rohrleitung (20) angeordnet ist, wobei ein stromabwärts angeordneter Abschnitt (20b) der Rohrleitung (20) durch die Molchschleuse (30) geführt ist und die Molchschleuse (30) oberhalb der Durchführung einen Raum (32) zur Aufnahme des Reinigungsmolchs (40) aufweist, der einen ungehinderten Durchfluss von Fluid durch die Molchschleuse (30) erlaubt.

2. Rohrleitungssystem mit wenigstens einer ein Fluid aufnehmenden Rohrleitung und einer mit der Rohrleitung verbundenen, einen Reinigungsmolch aufnehmenden Molchschleuse,
**dadurch gekennzeichnet, dass**
- der Reinigungsmolch (40) eine größere mittlere Dichte als das Fluid aufweist und
- die Molchschleuse (30) oberhalb eines stromaufwärts angeordneten Abschnitts (20a) der Rohrleitung (20) angeordnet ist, wobei ein stromabwärts angeordneter Abschnitt (20b) der Rohrleitung (20) durch die Molchschleuse (30) geführt ist und die Molchschleuse (30) unterhalb der Durchführung einen Raum (32) zur Aufnahme des Reinigungsmolchs (40) aufweist, der einen ungehinderten Durchfluss von Fluid durch die Molchschleuse (30) erlaubt.

3. Rohrleitungssystem (10) nach Anspruch 1, **dadurch gekennzeichnet, dass** die Molchschleuse (30) eine Entlüftungseinrichtung (34) zum Entlüften der Molchschleuse (30) aufweist.

4. Rohrleitungssystem (10) nach einem der vorhergehenden Ansprüche, **dadurch gekennzeichnet, dass** die Molchschleuse (30) eine Detektionseinrichtung zum Detektieren eines in der Molchschleuse (30) angeordneten Reinigungsmolchs (40) aufweist.

5. Rohrleitungssystem (10) nach einem der vorhergehenden Ansprüche, **dadurch gekennzeichnet, dass** zwischen dem stromaufwärts angeordneten Abschnitt (20a) der Rohrleitung (20) und der Molchschleuse (30) eine erste Absperreinrichtung (36) angeordnet ist.

6. Rohrleitungssystem (10) nach einem der vorhergehenden Ansprüche, **gekennzeichnet durch** einen vor dem stromabwärts angeordneten Teil der Molchschleuse (30) an der Rohrleitung (20) angeordneten Erntebehälter (60) zur Aufnahme von vom Reinigungsmolch (40) von der Rohrleitung (20) abgelösten Biofilm.

7. Rohrleitungssystem (10) nach Anspruch 6, **gekennzeichnet durch** eine zwischen der Rohrleitung (20) und dem Erntebehälter (60) angeordnete zweite Absperreinrichtung (70).

8. Rohrleitungssystem (10) nach einem der Ansprüche 6 und 7, **gekennzeichnet durch** eine in der Rohrleitung (20) zwischen dem Erntebehälter (60) und dem stromabwärts angeordneten Teil der Molchschleuse (30) angeordnete dritte Absperreinrichtung (80).
